# EUROPÄISCHE PATENTSCHRIFT

(11) **EP 1 751 408 B1**
(45) Veröffentlichungstag und Bekanntmachung des Hinweises auf die Patenterteilung: **16.12.2009**
(21) Anmeldenummer: 05750289.0
(22) Anmeldetag: 01.06.2005
(51) Int. Cl.: F01N 3/022

(54) **ABGASPARTIKELFILTER**
EXHAUST PARTICULATE FILTER
FILTRE DE PARTICULES DE GAZ D'ECHAPPEMENT

(30) Priorität: 02.06.2004 DE 102004026798
(43) Veröffentlichungstag der Anmeldung: 14.02.2007
(73) Patentinhaber: Daimler AG, 70327 Stuttgart (DE)
(72) Erfinder: FREY, Marcus, 71336 Waiblingen-Neustadt (DE); KOHBERG, Carsten, 58706 Menden (DE); LAMOTTE, Dominik, 59423 Unna (DE); SCHUMACHER, Uwe, 59494 Soest (DE)
(74) Vertreter: JENSEN & SON
(86) Internationale Anmeldenummer: PCT/EP2005/005869
(87) Internationale Veröffentlichungsnummer: WO 2005/119022

(56) Entgegenhaltungen:
- EP-A- 1 153 643
- DE-U1- 20 004 162
- US-A- 5 378 435
- PATENT ABSTRACTS OF JAPAN Bd. 009, Nr. 198 (M-404), 15. August 1985 (1985-08-15) & JP 60 062618 A (MITSUBISHI DENKI KK), 10. April 1985 (1985-04-10)

## Beschreibung

Die Erfindung betrifft einen Abgaspartikelfilter umfassend mehrere hintereinander angeordnete, aus Filterplatten gebildete Filtertaschen mit den Merkmalen des Oberbegriffs des Anspruchs 1 bzw. 2 oder 6.

Aus der Gebrauchsmusterschrift DE 200 04 162 U1 ist ein Abgaspartikelfilter bekannt, welches durch einen in ein Filtergehäuse eingesetzten Filterkörper gebildet ist. Der Filterkörper ist aus einzelnen in Hauptströmungsrichtung des Abgases hintereinander angeordneten Filtertaschen aufgebaut, wobei die Filtertaschen aus jeweils zwei einander zugeordneten, direkt benachbarten Sintermetallfilterplatten gebildet sind. Derartige Filterkörper werden zur Ausfilterung von Rußpartikeln aus dem Abgas von Dieselmotoren eingesetzt, wobei die Sintermetallfilterplatten eine zentrale, kreisrunde Ausschnittsöffnung aufweisen, welche der Ableitung des gefilterten Abgases dient.

Bei den entsprechenden Filterkörpern strömt ungereinigtes Abgas in im wesentlichen radialer Richtung in bezug auf den zylindrischen Filterkörper durch die Sintermetallfilterplatten in den Innenbereich des Filterkörpers. Beim Durchtritt durch die Sintermetallfilterplatten werden Partikel aus dem Abgas ausgefiltert und lagern sich außenseitig auf den die Filtertaschenwände bildenden Sintermetallfilterplatten ab. Das gereinigte Abgas strömt in axialer Richtung in bezug auf den Filterkörper an einem Ende des Filterkörpers aus und wird vorzugsweise von einer Abgasrohrleitung aufgenommen.

Bei derartigen Abgaspartikelfiltern kommt es häufig zur Ausbildung von strömungsmäßigen Totzonen im Bereich der Ausschnittsöffnungen der Filtertaschen, sowohl auf der außenliegenden Rohabgasseite als auch im Reingasbereich im Inneren des Filterkörper bzw. der Filtertasche. Diese Zonen werden vom Abgasstrom kaum erfasst, insbesondere da Umlenkungen und Rückströmungen an diesen Stellen zu einem lokal erhöhten Strömungswiderstand führen, wodurch ein entsprechend höherer Abgasgegendruck entsteht. Dies vermindert die Leistungsfähigkeit eines solchen Filtersystems, was beispielsweise durch ein größeres Bauvolumen ausgeglichen werden muß.

Aufgabe der Erfindung ist es daher, einen Abgaspartikelfilter mit einer verbesserten Filterleistung anzugeben.

Diese Aufgabe wird durch einen Abgaspartikelfilter mit den Merkmalen des Anspruchs 1 bzw. 2 oder 6 gelöst.

Der erfindungsgemäße Abgaspartikelfilter weist einen Filterkörper mit mehreren hintereinander angeordneten, durch paarweise Verbindung von Filterplatten gebildeten Filtertaschen auf. Die Filterplatten weisen eine flächige Ausschnittsöffnung mit einer die Ausschnittsöffnung umrandenden Umfangskontur auf, wobei die Umfangskontur der Ausschnittsöffnung Punkte umfasst, welche zum Schwerpunkt der Ausschnittsöffnungsfläche unterschiedliche Abstände aufweisen.

Unter einer Filterplatte wird hier ein plattenförmiger Zuschnitt eines filterwirksamen porösen Materials mit vergleichsweise geringer Dicke im Millimeterbereich verstanden. Vorzugsweise ist das entsprechende Material im Sinne eines Oberflächenfilters filterwirksam. Das Material kann beispielsweise aus mit einander verwobenen Fasern aufgebaut und gegebenenfalls durch Verstärkungseinlagen mechanisch stabilisiert sein. Vorzugsweise wird jedoch ein flacher metallischer Träger mit einer Vielzahl von kleinen Öffnungen, etwa in der Form eines Gitters oder eines Siebes eingesetzt. Der Träger kann auch in Form einer Matte, aufgebaut aus miteinander verwobenem Drahtmaterial oder in Form eines gitterförmigen Streckmetalls vorliegen. Auf den Träger können poröse Fasermatten aufgebracht sein, die mit dem Träger eine mehrlagige Verbundstruktur bilden. Vorzugsweise sind die Öffnungen jedoch mit einem körnigem Material ausgefüllt, dessen Verbund durch einen Sinterprozess erzielt ist. Die äußere Form des Filterplattenzuschnitts ist an die Einbauanforderungen für den zu bildenden Filterkörper angepasst. Hinsichtlich der Gestaltungsmöglichkeit ist eine große Variabilität gegeben. Die Filterplatten können je nach Anforderungen rund, oval, rechteckig oder als Vieleck ausgebildet sein. Bevorzugt sind Formen, welche eine Achsensymmetrie oder Punktsymmetrie aufweisen.

Die Ausschnittsöffnung der Filterplatte ist als Fläche ausgebildet, für die in üblicher Weise eine die Fläche begrenzende Umfangskontur und ein geometrischer Schwerpunkt definiert ist. Aus der Eigenschaft, dass die Umfangskontur Punkte umfasst, welche zum Schwerpunkt unterschiedliche Abstände aufweisen, resultiert, dass die Ausschnittsöffnung von einer Kreisform abweicht, also eine unrunde Gestalt bzw. Umfangskontur aufweist. Im Gegensatz zur bekannten kreisrunden Ausgestaltung der Ausschnittsöffnung lassen sich auf diese Weise an den jeweiligen Strömungsverlauf optimal angepasste strömungsgünstige Formen für die Ausschnittsöffnung festlegen. Dadurch lassen sich nachteilige strömungsmäßige Totzonen vermeiden. Entsprechend ausgestaltete Filtertaschen werden überwiegend gleichmäßig durchströmt und mit Partikeln belegt. Dies verbessert die Filterleistung und das Gegendruckverhalten.

Dabei werden unter der Ausschnittsöffnungsfläche auch nichtzusammenhängende Flächen verstanden. Dies ist gleichbedeutend mit der Tatsache, dass eine Ausschnittsöffnung einer Filterplatte aus mehreren, bzw. aus wenigstens zwei voneinander getrennten Teilflächen gebildet sein kann. Der Schwerpunkt einer solchen geteilten Ausschnittsöffnungsfläche kann somit auch außerhalb von dieser liegen. Dabei können die einzelnen Teilflächen eine kreisrunde Gestalt aufweisen oder unrund gestaltet sein. Vorzugsweise sind die Teilflächen so auf der Filterplatte verteilt, dass sich möglichst gleichmäßige Strömungsverhältnisse bei der Anströmung der Filtertasche und im Inneren der Filtertasche ausbilden. Dies wird insbesondere durch eine in bezug auf die Filterplatte außermittig, in der Nähe eines Randbereichs der Filterplatte angeordnete Ausschnittsöffnung oder durch mehrere außermittig angeordnete Ausschnittsöffnungen erreicht. Ebenfalls vorteilhaft ist die Ausdehnung der Ausschnittsöffnung bis in einen Randbereich der Filterplatte.

Ein erfindungsgemäßes Abgaspartikelfilter ist auch dadurch gekennzeichnet, dass die entsprechenden Filterplatten der Filtertaschen wenigstens eine flächige Ausschnittsöffnung aufweisen, wobei der Flächenschwerpunkt der Ausschnittsöffnungsfläche mit einem Abstand zur Mittellängsachse des Filterkörpers auf der Filterplatte angeordnet ist. Da die Filtertaschen hintereinander angeordnet sind, ergibt sich ein zylindrischer Filterkörper. Entsprechend ist für den resultierenden Filterkörper eine Mittellängsachse definiert und der Schwerpunkt der Ausschnittsöffnungsflächen der Filterplatten ist bezüglich dieser Achse versetzt. Vorteilhaft ist es, wenn die Filterplatten wenigstens eine Symmetrieachse aufweisen und der Schwerpunkt der Ausschnittsöffnungsfläche abseits wenigstens einer Symmetrieachse angeordnet ist. Somit sind die Ausschnittsöffnungen dezentral bzw. außermittig der symmetrisch ausgebildeten Filterplatte angeordnet. Vorzugsweise weisen die die Filtertaschen begrenzenden Filterplatten jedoch eine punktsymmetrische Gestalt auf und der Flächenschwerpunkt der Ausschnittsöffnungsfläche ist daher abseits des Symmetriepunkts auf der Filterplatte angeordnet.

In Ausgestaltung der Erfindung weist die Ausschnittsöffnung eine tropfenförmige Umfangskontur auf. Auf diese Weise lässt sich insbesondere die Einströmung in das Innere des Filterkörpers beeinflussen.

In weiterer Ausgestaltung der Erfindung ist die Ausschnittsöffnung als Langloch oder dreiecksförmig ausgebildet. Dabei kann das Langloch rechteckig, als Vieleck oder oval ausgebildet sein. Generell, wie auch im Fall eines Dreiecks, eines Vielecks oder eines mit Ecken versehenen Langlochs ist es vorteilhaft, die Ecken abgerundet auszubilden. Im Falle einer aus mehreren Teilflächen gebildeten Ausschnittsöffnung können diese unterschiedliche Geometrien aufweisen, wodurch eine besonders wirksame Beeinflussung der Strömungsverhältnisse ermöglicht ist. Vorzugsweise ist eine Filtertasche aus Filterplatten mit wenigstens einer Teilöffnung mit tropfenförmiger, dreiecksförmiger oder langlochförmiger Gestalt aufgebaut. Die Filterplatten können auch Ausschnittsöffnungen mit kombinierten Formen aufweisen.

In weiterer Ausgestaltung weisen die Filterplatten zur Filtertascheninnenseite und/oder zur Filtertaschenaußenseite gerichtete Erhebungen auf. Diese Erhebungen sind vorzugsweise als Noppen oder Sicken bzw. Stege ausgebildet. Insbesondere die zur Innenseite der Filtertasche gerichteten Erhebungen dienen dabei der Abstandshaltung. Dadurch wird verhindert, dass die Filterplatten einer Filtertasche unter der Einwirkung des Abgasdrucks flächig aufeinander gedrückt werden können, so dass gegebenenfalls die Abgasströmung behindert oder blockiert würde. Insbesondere bei in Form von Sicken gebildeten Erhebungen bzw. Abstandshaltern ist zudem eine erhöhte mechanische Stabilität der Filterplatten durch eine erhöhte Biegesteifigkeit gegeben.

Ein erfindungsgemäßer Abgaspartikelfilter ist auch durch einen Filterkörper gebildet, dessen Filterplatten unterschiedliche Ausschnittsöffnungen aufweisen. Die Ausschnittsöffnungen von verschiedenen Filterplatten können dabei hinsichtlich des Flächeninhalts der Ausschnittsöffnungsfläche und/oder ihrer Gestalt voneinander abweichen. Auf diese Weise ist eine Anpassung auf lokal unterschiedliche Anströmbedingungen ermöglicht. Insbesondere ist es ermöglicht, die Filtertaschen auf in Hauptabgasströmungsrichtung sich kontinuierlich verändernde Bedingungen anzupassen. Damit kann den sich meist in Hauptabgasströmung verändernden Abgasmassenströmen oder Partikelablagerungen auf den Filtertaschenwänden Rechnung getragen werden.

Vorteilhaft ist es insbesondere, wenn in weiterer Ausgestaltung der Erfindung der Filterkörper Filterplatten mit Ausschnittsöffnungen mit in Hauptabgasströmungsrichtung gesehen zunehmendem Flächeninhalt aufweist. Auf diese Weise wird eine besonders gleichmäßige Abgasausströmung aus den einzelnen Filtertaschen des Filterkörpers erreicht.

In weiterer Ausgestaltung der Erfindung weist der Filterkörper Filterplatten mit Ausschnittsöffnungen mit in Hauptabgasströmungsrichtung sich zunehmend an eine kreisrunde Form annähernder Gestalt auf. Auf diese Weise ist in vorteilhafter Weise ein bezüglich des Filterkörpers abschlussseitiger Übergang auf eine den gereinigten Abgasstrom aufnehmende Rohrleitung ermöglicht.

In weiterer Ausgestaltung der Erfindung sind die Filterplatten im wesentlichen eben ausgebildet und die Filterplatten einer jeweiligen Filtertasche sind mit geringem Abstand zueinander in parallel zueinander verlaufenden Ebenen angeordnet. Dies vereinfacht die Fertigung der Filtertaschen, da diese aus im wesentlichen ebenen Zuschnitten des Filterplattenmaterials, gegebenenfalls auch durch einfaches Umbiegen, gefertigt werden können.

In weiterer Ausgestaltung der Erfindung sind die Filterplatten als Sintermetallfilterplatten ausgebildet. Bei einer solchen Sintermetallfilterplatte kann sich um einen Plattenzuschntt aus versintertem Metallfasermaterial handeln. Vorzugsweise ist eine solche Sintermetallfilteplatte jedoch aus einem flächigen Metallgitterzuschnitt geringer Dicke gebildet, wobei die Gitteröffnungen durch ein metallhaltiges Pulver ausgefüllt sind, welches einem Sinterprozess unterworfen wurde. Als gitterförmiger Träger der Sintermetallfilterplatte werden vorzugsweise verwobene Drahtstrukturen oder Streckmetall eingesetzt. Es lassen sich jede dem Fachmann geläufige Art von Träger und Sintermaterial verwenden, welche eine ausreichende Haltbarkeit für den entsprechenden Einsatzfall aufweisen. Die Porosität der Sintermetallfilterplatte lässt sich beispielsweise durch die Körnigkeit des Sintermaterials und den Sinterprozess gezielt einstellen.

Aufgrund der Temperaturbeständigkeit von Sintermetallmaterial sind entsprechend ausgeführte Partikelfilter besonders geeignet zur Reinigung von Brennkraftmaschinenabgasen in Kraftfahrzeugen

Im Folgenden wird die Erfindung anhand von Zeichnungen und zugehörigen Beispielen näher erläutert. Dabei zeigen:
- Fig. 1a: eine Filterplatte zur Ausbildung einer Filtertasche für einen Filterkörper nach dem Stand der Technik,
- Fig. 1b: eine schematische Längsschnitt-Darstellung eines aus Filterplatten nach Fig. 1a aufgebauten Filterkörpers,
- Fig. 2a: eine erste bevorzugte Ausführungsform für eine Filterplatte zur Ausbildung eines erfindungsgemäßen Abgaspartikelfilters,
- Fig. 2b: eine zweite bevorzugte Ausführungsform für eine Filterplatte zur Ausbildung eines erfindungsgemäßen Abgaspartikelfilters,
- Fig. 3: eine dritte bevorzugte Ausführungsform für eine Filterplatte zur Ausbildung eines erfindungsgemäßen Abgaspartikelfilters,
- Fig. 4: eine vierte bevorzugte Ausführungsform für eine Filterplatte zur Ausbildung eines erfindungsgemäßen Abgaspartikelfilters,
- Fig. 5a bis 5d: weitere bevorzugte Ausführungsformen für eine Filterplatte zur Ausbildung eines erfindungsgemäßen Abgaspartikelfilters und
- Fig. 6: eine schematische Darstellung einer Anordnung von Filterplatten zur Ausbildung eines erfindungsgemäßen Abgaspartikelfilters.

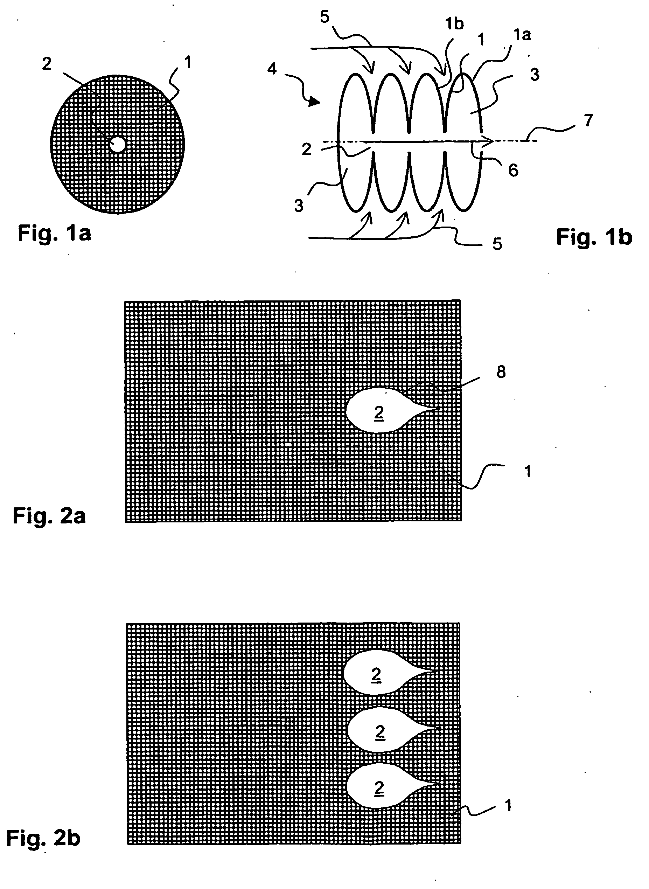

In Fig. 1a ist eine Sintermetallfilterplatte 1 dargestellt, wie sie zur Ausbildung eines Filterkörpers für ein Abgaspartikelfilter in bekannter Weise verwendet wird. Die Sintermetallfilterplatte 1 ist kreisrund ausgeführt und weist eine ebenfalls kreisrunde Ausschnittsöffnung 2 auf, die zentral auf der Sintermetallfilterplatte 1 angeordnet ist.

Zur Ausbildung eines Filterkörpers nach dem Stand der Technik werden eine Vielzahl von gleichen Sintermetallfilterplatten 1 wechselseitig miteinander verbunden, so dass sich eine stapelförmige Anordnung ergibt. In dieser weist, abgesehen von den endständigen Sintermetallfilterplatten 1, jede Sintermetallfilterplatte 1 zwei nächste Nachbarn auf. Für den Aufbau eines erfindungsgemäßen Filterkörpers kann prinzipiell in analoger Weise vorgegangen werden. Nachfolgend wird zur Erläuterung auf Fig. 1b bezug genommen. Die Verbindung der Sintermetallfilterplatten 1 erfolgt in der Weise, dass eine Sintermetallfilterplatte 1 ringsum entlang ihres Außenumfangs mit ihrem ersten Nachbarn 1a beispielsweise durch Verschweißung verbunden ist. Ferner ist diese Sintermetallfilterplatte 1 ringsum entlang der Umfangskontur der Ausschnittsöffnung 2 mit ihrem zweiten Nachbarn 1b beispielsweise durch Verschweißung verbunden. Auf diese Weise ergibt sich eine Anordnung von hintereinander angeordneten, aus Filterplatten 1 gebildeten Filtertaschen.

In Fig. 1b ist schematisch ein auf diese Weise gebildeter Filterkörper 4 im Längsschnitt dargestellt, wobei lediglich eine Sintermetallfilterplatte 1 mit dem entsprechenden Bezugszeichen gekennzeichnet ist. Zu erkennen ist, dass sich durch die paarweise Verbindung der Sintermetallfilterplatten 1 einzelne hintereinander angeordnete Filtertaschen 3 ausbilden, die in ihrer Gesamtheit den zylindrischen Filterkörper 4 bilden. Dieser weist bei vorzugsweise eingesetzten achsensymmetrischen oder punktsymmetrischen Filterplatten 1 eine Mittellängsachse 7 auf. Zur Ausbildung eines Abgaspartikelfilters wird der Filterkörper 4 in ein nicht dargestelltes Gehäuse eingebaut, so dass eine Integration in ein Abgassystem einer Brennkraftmaschine (nicht dargestellt) erfolgen kann.

Wie durch die Pfeile 5 angedeutet, erfolgt eine bezüglich des Filterkörpers 4 etwa radiale Einströmung von Abgas ins Innere des Filterkörpers 4 bzw. der Filtertaschen 3. Mit dem Durchtritt durch die porösen Sintermetallfilterplatten 1 erfolgt eine Filterung des Abgases. Im Abgas enthaltene Partikel lagern sich aussenseitig in bezug auf den Filterkörper 4 auf den Sintermetallfilterplatten ab. Durch die Ausschnittsöffnungen 2 erfolgt eine Ableitung gefiltertern Abgases entsprechend der durch den Pfeil 6 dargestellten Hauptabgasströmungsrichtung.

Üblicherweise wird zur Erzielung einer guten Filterwirkung eine hohe Packungsdichte von Filtertaschen 3 angestrebt. Dies hat einen entsprechend geringen Abstand der Sintermetallfilterplatten 1 untereinander zur Folge. Aussenseitig des Filterkörpers 4 verengen sich die Abstände der Sintermetallfilterplatten 1 zweier benachbarter Filtertaschen 3 radial nach innen. Innenseitig des Filterkörpers 4 verengen sich die Abstände der Sintermetallfilterplatten 1 jeder Filtertasche 3 radial nach außen hin. Damit ergeben sich in bezug auf eine gleichmäßige Anströmung und Durchströmung der Filtertaschen 3 und des gesamten Filterkörpers 4 kritische Verhältnisse sowohl im radial inneren als auch im radial äußeren Bereich. Erfindungsgemäß werden die Strömungsverhältnisse durch speziell gestaltete Filterplatten 1 verbessert. Insbesondere ermöglicht erfindungsgemäß eine spezielle Lage, Geometrie und Anzahl der Ausschnittsöffnungen 2 die Vermeidung strömungsmäßiger Totzonen und eine Verbesserung des Gegendruckverhaltens.

Nachfolgend werden einige besonders vorteilhafte Ausführungsformen von Filterplatten 1 anhand von Beispielen beschrieben. Obschon die Filterplatten 1 aus einem beliebigen, für die Anwendung geeigneten Material gefertigt sein können, wird nachfolgend davon ausgegangen, dass es sich bei den Filterplatten 1 um Sintermetallfilterplatten üblicher Machart handelt und die Verbindung der einzelnen Filterplatten 1 zu einem Filterkörper 4 in der beschriebenen Weise erfolgt. Für die Merkmale des sich ergebenden Filterkörpers wird daher auf Fig. 1b Bezug genommen. Die Filterplatten zur Ausbildung eines erfindungsgemäßen Partikelfilters sind vorzugsweise punktsymmetrisch oder achsensymmetrisch mit einer kreisförmigen oder ovalen Form oder als Vieleck ausgebildet. Nachfolgend wird ohne Beschränkung der Allgemeinheit jedoch von einer rechteckigen Form für die Filterplatte ausgegangen.

In Fig. 2a ist eine rechteckige Filterplatte 1 mit einer Ausschnittsöffnung 2 dargestellt, deren Fläche bzw. Umfangskontur 8 tropfenförmig ausgebildet ist. Durch die Tropfenform der Ausschnittsöffnung 2 vermindert sich der Strömungswiderstand des gesamten Filterkörpers 4 insbesondere auf der Rohgasseite. Gleichzeitig wird eine gleichmäßigere Anströmung und ein geringer Druckverlust sowohl auf der Rohgasseite als auch auf der Reingasseite erreicht. Strömungsmäßige Totzonen können durch die erfindungsgemäße Form der Ausschnittsöffnung 2 weitgehend vermieden werden. Der Übergang von der Ausschnittsöffnung in den Reingassraum im Filtertascheninneren (Plenum) wird durch die unrunde, tropfenförmige Gestalt der Ausschnittsöffnung 2 im Vergleich zu einer kreisförmigen Ausschnittsöffnung verbessert, so dass auch daraus ein verminderter Druckverlust resultiert. Insbesondere ist es vorteilhaft, die Ausschnittsöffnung wie dargestellt außermittig auf der Filterplatte 1 anzuordnen.

Vorteilhaft ist es gemäß Fig. 2b weiterhin, mehrere Ausschnittsöffnungen 2 vorzusehen. Im dargestellten Fall sind diese auf einer Seite der Filterplatte 1 mit einem seitlichen Abstand zum Filterplattenzentrum untereinander angeordnet. Es versteht sich jedoch, dass die Auslassöffnungen 2 auch auf andere Weise auf der Filterplatte 1 angeordnet sein können. Durch die Bereitstellung mehrerer, insbesonderer tropfenförmiger Auslassöffnungen 2 reduzieren sich die Verwirbelungen und der Anteil der Umlenkungen rechtwinklig zur Hauptabgasströmungsrichtung 6 und damit der Druckverlust. Selbstverständlich sind andere, von einer Tropfenform abweichende Formen für die Auslassöffnungen 2 ebenfalls möglich.

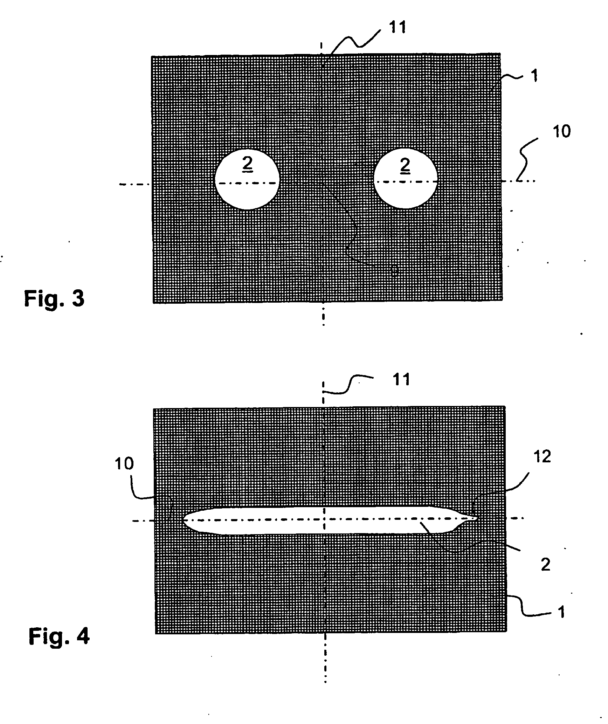

Eine weitere vorteilhafte Ausführungsform für eine Filterplatte 1 zur Ausbildung eines erfindungsgemäßen Abgaspartikelfilters ist in Fig. 3 dargestellt. Zwei kreisrunde Ausschnittsöffnungen 2 sind symmetrisch zu einer ersten Hauptachse 11 der Filterplatte 1 derart auf der Filterplatte 1 angeordnet, dass ihre Mittelpunkte auf der zweiten Hauptachse 10 liegen. Dies ermöglicht ebenfalls eine gleichmäßige Einströmung in den Innenbereich der entsprechenden Filtertaschen. Wie aus Fig. 3 ersichtlich, sind die Schwerpunkte der beiden Teile der Ausschnittsöffnung 2 jeweils mit einem Abstand zur Mittellängsachse 7 eines entsprechenden Filterkörpers 4 auf der Filterplatte 1 angeordnet. Dabei gibt der Mittelpunkt 9 den Durchstoßpunkt der Mittellängsachse 7 des entsprechenden Filterkörpers 4 an.

Vorteilhafte Strömungseigenschaften resultieren auch, wenn die Ausschnittsöffnung wie in Fig. 4 dargestellt als Langloch ausgebildet ist. Dabei ist es besonders vorteilhaft, wenn die als Langloch ausgeführte Ausschnittsöffnung 2 einen zipfel- oder fortsatzartig gestalteten Endbereich 12 aufweist. Die Ausschnittsöffnung 2 kann auf einer Seite oder auf beiden Seiten einen solcherart gestalteten Endbereich 12 aufweisen. Filterplatten mit langlochförmiger Ausschnittsöffnung ermöglichen zudem den Aufbau besonders niedrig bauender, flacher Filterkörper mit hervorragenden Strömungseigenschaften und Filterleistungen. Im Falle einer rechteckigen Filterplatte 1 ist es insbesondere für eine gleichmäßige Strömungsverteilung vorteilhaft, wenn die langlochförmige Ausschnittsöffnung 2 sich parallel zur längeren Seite des Filterplattenrechtecks erstreckt und auf der entsprechenden Hauptachse 10 der Filterplatte 1 angeordnet ist.

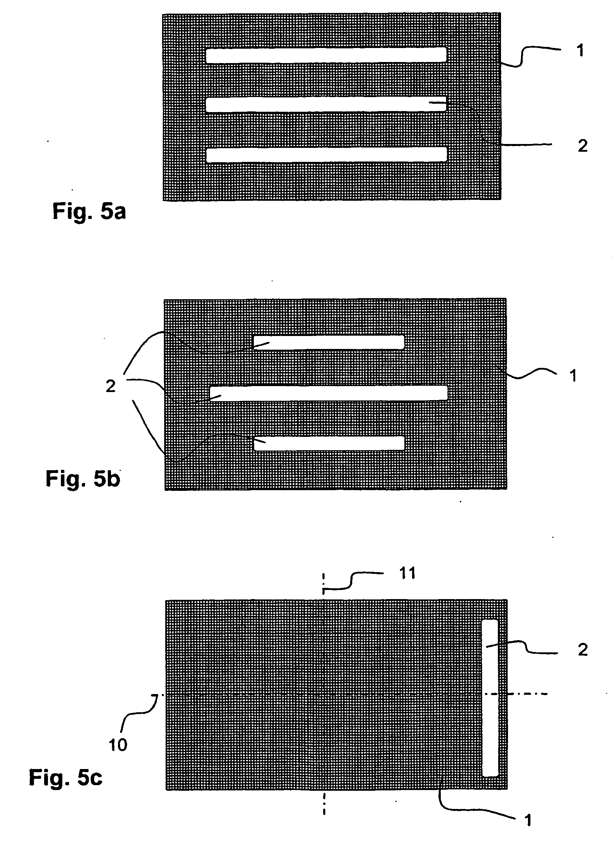

In den Fig. 5a bis 5d sind weitere Beispiele für bevorzugte Ausführungsformen für eine Filterplatte zur Ausbildung eines erfindungsgemäßen Abgaspartikelfilters dargestellt. Dabei zeigt Fig. 5a eine Filterplatte 1 mit drei gleich großen langlochförmigen Ausschnittsöffnungen 2 ähnlich der in Fig. 4 dargestellten. Im Gegensatz hierzu weist die Filterplatte 1 nach Fig. 5b langlochförmige Ausschnittsöffnungen 2 mit unterschiedlichen Ausschnittsöffnungsflächen auf. Dies resultiert im vorliegenden Fall aus der unterschiedlichen Längserstreckung der Ausschnittsöffnungen 2. Es ist selbstverständlich möglich, die unterschiedlichen Ausschnittsöffnungsflächen auch durch gleich lange, jedoch unterschiedlich breite Langlöcher oder auf andere Weise zu realisieren.

Beispielsweise aus Gründen der konstruktiven vorgaben kann es auch vorteilhaft sein, die Ausschnittsöffnung 2 als Langloch auszuführen und an einem Rand der Filterplatte 1, ähnlich der in Fig. 2a dargestellten Anordnung, anzuordnen. Fig. 5c zeigt beispielhaft eine solche Ausführungsform. Bei dieser ist für die Filterplatte 1 eine Ausschnittsöffnung 2 in Form eines Langlochs vorgesehen, wobei die Ausschnittsöffnung 2 beabstandet und mit paralleler Ausrichtung zur ersten Hauptachse 11 auf der Filterplatte 1 angeordnet ist. Ferner weist die Ausschnittsöffnung 2 eine Achsensymmetrie bezüglich der zweiten Hauptachse 10 der rechteckigen Filterplatte 1 auf.

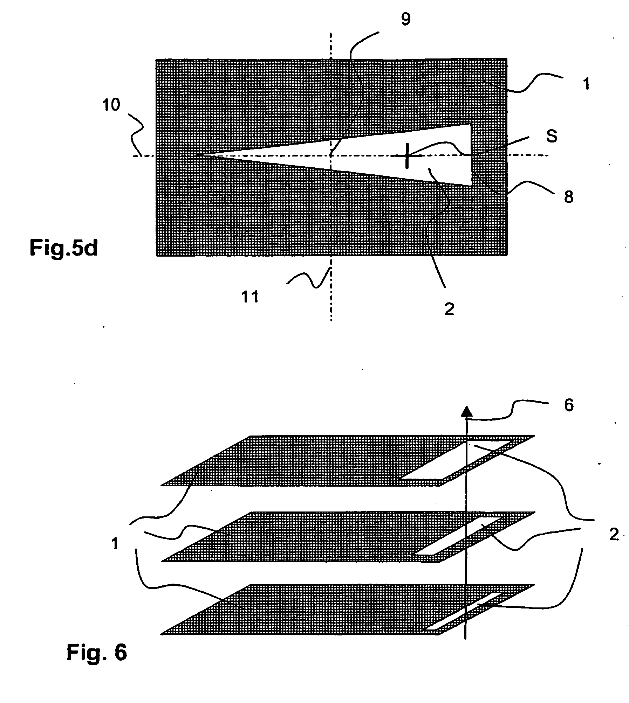

In Fig. 5d ist eine weitere bevorzugte Ausführungsform für eine Filterplatte zur Ausbildung eines erfindungsgemäßen Abgaspartikelfilters dargestellt. Die Filterplatte 1 weist eine Ausschnittsöffnung 2 in Form eines spitzwinkligen Dreiecks mit einer entsprechenden Umfangskontur 8 auf. Wie dargestellt, ist der Schwerpunkt S der Ausschnittsöffnungsfläche beabstandet zum Symmetriemittelpunkt 9 der Filterplatte 1, wobei der Symmetriemittelpunkt 9 durch den Schnittpunkt der Hauptachsen 10, 11 der Filterplatte 1 definiert ist. Durch diesen verläuft gleichzeitig die Mittellängsachse 7 eines mit entsprechenden Filtertaschen 3 aufgebauten Filterkörpers 4 gemäß Fig. 1b. Die Form der Ausschnittsöffnung kann an die Strömungsverhältnisse innerhalb des Partikelfiltergehäuses, in welchem der Filterkörper 4 angeordnet ist, angepasst sein. Dies ist insbesondere bei einem seitlichen Abgaseintritt in das Partikelfiltergehäuse oder bei einem seitlichen Abgasaustritt aus dem Partikelfiltergehäuse zur Schaffung optimaler Strömungsverhältnisse vorteilhaft. Zur Erzielung eines gleichmäßig verteilten Druckverlustes über den aus einer Vielzahl von hintereinander angeordneten Filtertaschen 3 mit entsprechenden Filterplatten 1 gebildeten Filterkörper 4, ist es vorteilhaft, wenn die Ausschnittsöffnungsfläche in Hauptabgasströmungsrichtung 6 zunimmt.

Eine solche Anordnung ist wie schematisch in Fig. 6 dargestellt realisierbar, wobei lediglich drei hintereinander angeordnete Filterplatten 1 dargestellt sind. Auf die Darstellung der wechselseitigen Verbindung der Filterplatten 1 zu Filtertaschen 3 wurde aus Gründen der Übersichtlichkeit verzichtet. Wie dargestellt, weisen die Filterplatten 1 hier langlochförmige Ausschnittsöffnungen 2 auf. Die Ausschnittsöffnungsfläche nimmt dabei in Richtung der mit dem Pfeil 6 dargestellten Hauptabgasströmungsrichtung zu. Dadurch wird der Tatsache Rechnung getragen, dass in der angegebenen Richtung zunehmende Gasmengen durch die Ausschnittsöffnungen 2 strömen. Der dadurch tendenziell ansteigende Druckverlust beim Durchströmen einer jeweiligen Ausschnittsöffnung 2 wird durch die anwachsende Ausschnittsöffnungsfläche vermieden. Obschon in der in Fig. 6 dargestellten Ausführungsform die Ausschnittsöffnung 2 einer jeweiligen Filterplatte 1 als außermittig angeordnetes Langloch ausgebildet ist, sind selbstverständlich auch andere Formen und Lagen für die Ausschnittsöffnung 2 möglich. Insbesondere ist eine Gestalt der Ausschnittsöffnung 2 entsprechend einer der in den Fig. 2 bis 5 dargestellten Formen möglich und vorteilhaft.

Generell können die einzelnen Filterplatten 1 eines Filterkörpers 4 sowohl hinsichtlich der Gestalt als auch hinsichtlich des Flächeninhalts unterschiedliche Ausschnittsöffnungen aufweisen. Für den Anschluss einer Rohrleitung ist es vorteilhaft, wenn sich die Form der Ausschnittsöffnung gegen Ende der Ausströmseite des Filterkörpers 4 an eine Kreisform annähert. Schließlich ist es generell vorteilhaft, die Filterplatten 1 mit lokalen Erhebungen in der Form von in die Filtertascheninnenseite gerichteten Einprägungen zu versehen (in den Figuren nicht dargestellt). Diese können als Noppen oder Sicken bzw. Stege ausgebildet sein, welche sich zur Innenseite einer jeweiligen Filtertasche 3 erheben. Vorteilhaft ist es, etwa gleichmäßig verteilt noppenförmige Erhebungen für die Filterplatten 1 vorzusehen. Auf diese Weise wird vermieden, dass die Filterplatten 1 einer jeweiligen Filtertasche 3 vom Abgasdruck flächig aufeinander gedrückt werden können und der Gasstrom dadurch blockiert wird. Zudem verleihen die Erhebungen den Filterplatten 1 eine höhere mechanische Stabilität.

Für den Fall, dass mehrere Ausschnittsöffnungen 2 auf einer jeweiligen Filterplatte 1 angeordnet sind, können auf einer Filterplatte 1 Bereiche vorhanden sein, die nicht filterwirksam sind. Dies können dann aus einem gasdichten Material, ausgeführt sein und zusätzlich ein Befestigungselement zur Befestigung des Filterkörpers 4 mit dem umgebenden Gehäuse aufweisen. Es versteht sich, dass wenigstens die gasdurchlässigen, porösen Bereiche der Filterplatten 1 katalytisch beschichtet sein können, um beispielsweise das Abbrennen von abgeschiedenen Rußteilchen zu unterstützen.

## Patentansprüche

1. Abgaspartikelfilter, mit einem Filterkörper (4) umfassend mehrere hintereinander angeordnete, durch paarweise Verbindung von Filterplatten (1) gebildete Filtertaschen (3), wobei die Filterplatten (1) eine flächige Ausschnittsöffnung (2) mit einer die Ausschnittsöffnung (2) umrandenden Umfangskontur (8) aufweisen,
**dadurch gekennzeichnet, dass**
die Umfangskontur (8) Punkte umfasst, welche zum Flächenschwerpunkt (S) der Ausschnittsöffnungsfläche (2) unterschiedliche Abstände aufweisen.

2. Abgaspartikelfilter, mit einem Filterkörper (4) umfassend mehrere hintereinander angeordnete, durch paarweise Verbindung von Filterplatten (1) gebildete Filtertaschen (3), wobei die Filterplatten (1) wenigstens eine flächige Ausschnittsöffnung (2) aufweisen,
**dadurch gekennzeichnet, dass**
der Flächenschwerpunkt (S) der wenigstens einen Ausschnittsöffnungsfläche (2) mit einem Abstand zur Mittellängsachse (7) des Filterkörpers (4) auf der Filterplatte (1) angeordnet ist.

3. Abgaspartikelfilter nach Anspruch 1 oder 2,
**dadurch gekennzeichnet, dass**
die Ausschnittsöffnung (2) eine tropfenförmige Umfangskontur aufweist.

4. Abgaspartikelfilter nach einem der Ansprüche 1 bis 3,
**dadurch gekennzeichnet, dass**
dass die Ausschnittsöffnung (2) als Langloch oder dreiecksförmig ausgebildet ist.

5. Abgaspartikelfilter nach einem der Ansprüche 1 bis 4,
**dadurch gekennzeichnet, dass**
die Filterplatten (1) zur Filtertascheninnenseite und/oder zur Filtertaschenaußenseite gerichtete Erhebungen aufweisen.

6. Abgaspartikelfilter, mit einem Filterkörper (4) umfassend mehrere hintereinander angeordnete, durch paarweise Verbindung von Filterplatten (1) gebildete Filtertaschen (3), wobei die Filterplatten (1) wenigstens eine flächige Ausschnittsöffnung (2) aufweisen,
**dadurch gekennzeichnet, dass**
der Filterkörper (4) Filterplatten (1) mit unterschiedlichen Ausschnittsöffnungen (2) aufweist.

7. Abgaspartikelfilter einem der Ansprüche 1 bis 6,
**dadurch gekennzeichnet, dass**
der Filterkörper (4) Filterplatten (1) mit Ausschnittsöffnungen (2) mit in Hauptabgasströmungsrichtung (6) gesehen zunehmendem Flächeninhalt aufweist.

8. Abgaspartikelfilter nach einem der Ansprüche 1 bis 7,
**dadurch gekennzeichnet, dass**
der Filterkörper (4) Filterplatten (1) mit Ausschnittsöffnungen (2) mit in Hauptabgasströmungsrichtung (6) sich zunehmend an eine kreisrunde Form annähernder Gestalt aufweist.

9. Abgaspartikelfilter nach einem der Ansprüche 1 bis 8,
**dadurch gekennzeichnet, dass**
die Filterplatten (1) im wesentlichen eben ausgebildet sind und die Filterplatten (1) einer jeweiligen Filtertasche (3) mit geringem Abstand zueinander in parallel zueinander verlaufenden Ebenen angeordnet sind.

10. Abgaspartikelfilter nach einem der Ansprüche 1 bis 9,
**dadurch gekennzeichnet, dass**
die Filterplatten (1) als Sintermetallfilterplatten ausgebildet sind.

## Claims

1. Exhaust particulate filter with a filter body (4) comprising several filter pockets (3) arranged one behind the other formed by connecting filter plates (1) in pairs, wherein the filter plates (1) have a planar cutout opening (2) with a circumferential contour (8) surrounding the cutout opening (2),
**characterized in that**
the circumferential contour (8) comprises points, which have different distances to the center of gravity of the surface (S) of the cutout opening surface (2).

2. Exhaust particulate filter with a filter body (4) comprising several filter pockets (3) arranged one behind the other formed by connecting filter plates (1 ) in pairs, wherein the filter plates (1) have at least a planar cutout opening (2),
**characterized in that**
the center of gravity of the surface (S) of the at least one cutout opening surface (2) is arranged with a distance to the central longitudinal axis (7) of the filter body (4) on the filter plate (1).

3. Exhaust particle filter according to claim 1 or 2,
**characterized in that**
the cutout opening (2) comprises a droplet-shaped circumferential ccontour.

4. Exhaust particle filter according to one of claims 1 to 3,
**characterized in that**
the cutout opening (2) is formed as an elongated hole or triangular.

5. Exhaust particle filter according to one of claims 1 to 4,
**characterized in that**
the filter plates (1) comprise elevations towards the inner side of the filter pockets and/or towards the outer side of the filter pockets.

6. Exhaust particulate filter with a filter body (4) comprising several filter pockets (3) arranged one behind the other formed by connecting filter plates (1) in pairs, wherein the filter plates (1) have at least a planar cutout opening (2),
**characterized in that**
the filter body (4) has filter plates (1) with different cutout openings (2).

7. Exhaust particle filter according to one of claims 1 to 6,
**characterized in that**
the filter body (4) comprises filter plates (1) with cutout openings (2) with an increasing surface content seen in the main exhaust flow direction (6).

8. Exhaust particle filter according to one of claims 1 to 7,
**characterized in that**
the filter body (4) comprises filter plates (1) with cutout openings (2) having a design increasingly approaching a circular form in the main exhaust flow direction (6).

9. Exhaust particle filter according to one of claims 1 to 8,
**characterized in that**
the filter plates (1) are formed in an essentially planar manner, and the filter plates (1) of a respective filter pocket (3) are arranged wityh a small distance to one another in planes running parallel to one another.

10. Exhaust particle filter according to one of claims 1 to 9,
**characterized in that**
the filter plates (1) are formed as sintered metal filter plates.

## Revendications

1. Filtre à particules, avec un corps de filtre (4) comprenant
plusieurs poches de filtre (3) disposées les unes derrière les autres, et formées par une liaison appariée de filtres à plaques (1) si bien que les filtres à plaques (1) présentent une ouverture de déversoir extensive (2) équipée d'un profil superficiel (8) entourant l'ouverture du déversoir (2),
**caractérisé en ce que** le profil superficiel (8) comprend des points qui présentent différents écarts au niveau du centroïde(S) de la surface de l'ouverture du déversoir (2).

2. Filtre à particules, avec un corps de filtre (4) comprenant
plusieurs poches de filtre (3) disposées les unes derrière les autres, et formées par une liaison appariée de filtres à plaques (1) si bien que les filtres à plaques (1) présentent au moins une ouverture de déversoir superficielle (2), **caractérisé en ce que** le centroïde (S) d'au moins une ouverture de déversoir (2) est disposé à l'écart de l'axe longitudinal central (7) du corps de filtre (4) du filtre à plaques (1).

3. Filtre à particules selon revendications 1 ou 2,
**caractérisé en ce que** l'ouverture du déversoir (2) présente un profil superficiel fonctionnant selon un système de goutte à goutte.

4. Filtre à particules selon revendications 1 à 3,
**caractérisé en ce que** l'ouverture du déversoir (2) a une forme de trou longitudinal ou une forme triangulaire.

5. Filtre à particules selon une des revendications 1 à 4,
**caractérisé en ce que** les filtres à plaques (1) sont relevés et orientés vers la face intérieure de la poche du filtre et/ou de la face extérieure de la poche du filtre.

6. Filtre à particules, avec un corps de filtre (4) comprenant
plusieurs poches de filtre (3) disposées les unes derrière les autres, et formées par une liaison appariée de filtres à plaques (1) si bien que les filtres à plaques (1) présentent au moins une ouverture de déversoir superficielle (2),
**caractérisé en ce que** le corps de filtre (4) présente des filtres à plaques (1) avec différentes ouvertures de déversoir (2).

7. Filtre à particules selon une des revendications 1 à 6,
**caractérisé en ce que** le corps de filtre (4) présente des filtres à plaques (1) équipés d'ouvertures de déversoir (2) dont le contenu augmente selon la direction du flux des principaux gaz d'échappement (6).

8. Filtre à particules selon une des revendications 1 à 7,
**caractérisé en ce que** le corps de filtre (4) présente des filtres à plaques (1) équipés d'ouvertures de déversoir (2) dont la silhouette prend progressivement une forme circulaire selon la direction du flux des principaux gaz d'échappement (6).

9. Filtre à particules selon une des revendications 1 à 8,
**caractérisé en ce que** les filtres à plaques (1) sont pour l'essentiel plats et les filtres à plaques (1) sont disposés par rapport à une poche de filtres correspondante (3) avec un faible écart et parallèlement à des niveaux progressifs.

10. Filtre à particules selon une des revendications 1 à 9, **caractérisé en ce que** les filtres à plaques (1) sont conçus comme des filtres à plaques en métal fritté.
